# EUROPÄISCHE PATENTSCHRIFT

(11) **EP 1 694 755 B1**
(45) Veröffentlichungstag und Bekanntmachung des Hinweises auf die Patenterteilung: **10.03.2010**
(21) Anmeldenummer: 04803719.6
(22) Anmeldetag: 10.12.2004
(51) Int. Cl.: C08J 9/16, C08J 9/14

(54) **EXPANDIERBARE STYROLPOLYMERGRANULATE MIT BI- ODER MULTIMODALER MOLEKULARGEWICHTSVERTEILUNG**
EXPANDABLE POLYSTYRENE GRANULATES WITH A BI- OR MULTI-MODAL MOLECULAR-WEIGHT DISTRIBUTION
GRANULES DE POLYSTYRENE EXPANSE A REPARTITION DES POIDS MOLECULAIRES BIMODALE OU MULTIMODALE

(30) Priorität: 12.12.2003 DE 10358804
(43) Veröffentlichungstag der Anmeldung: 30.08.2006
(73) Patentinhaber: BASF SE, 67056 Ludwigshafen (DE)
(72) Erfinder: HAHN, Klaus, 67281 Kirchheim (DE); EHRMANN, Gerd, 67146 Deidesheim (DE); RUCH, Joachim, 67157 Wachenheim (DE); ALLMENDINGER, Markus, 67149 Meckenheim (DE); SCHMIED, Bernhard, 67227 Frankenthal (DE); HOLOCH, Jan, 69181 Leimen (DE); DIETZEN, Franz-Josef, 67454 Hassloch (DE)
(86) Internationale Anmeldenummer: PCT/EP2004/014071
(87) Internationale Veröffentlichungsnummer: WO 2005/056655

(56) Entgegenhaltungen:
- EP-A- 0 909 782
- EP-A- 0 915 126
- WO-A-00/43442
- US-A1- 2003 162 852
- PATENT ABSTRACTS OF JAPAN Bd. 2002, Nr. 12, 12. Dezember 2002 (2002-12-12) & JP 2002 226622 A (HITACHI CHEM CO LTD), 14. August 2002 (2002-08-14)

## Beschreibung

Die Erfindung betrifft expandierbare Styrolpolymergranulate mit mindestens bi- oder multi-modale Molekulargewichtsverteilung, Verfahren zu deren Herstellung und Verwendung zur Herstellung von Partikelschaumformteilen.

Verfahren zur Herstellung von expandierbaren Styrolpolymeren, wie expandierbarem Polystyrol (EPS) durch Suspensionspolymerisation ist seit langem bekannt. Diese Verfahren haben den Nachteil, dass große Mengen Abwasser anfallen und entsorgt werden müssen. Die Polymerisate müssen getrocknet werden um Innenwasser zu entfernen. Außerdem führt die Suspensionspolymerisation in der Regel zu breiten Perlgrößenverteilungen, die aufwändig in verschiedene Perlfraktionen gesiebt werden müssen.

Weiterhin können expandierte und expandierbare Styrolpolymerisate mittels Extrusionsverfahren hergestellt werden. Hierbei wird das Treibmittel z.B. über einen Extruder in die Polymerschmelze eingemischt, durch eine Düsenplatte gefördert und zu Partikeln oder Strängen granuliert (US 3,817,669, GB 1,062,307, EP-B 0126 459, US 5,000,891 sowie US 2003/0162852).

Die EP-A 668 139 beschreibt ein Verfahren zur wirtschaftlichen Herstellung von expandierbarem Polystyrolgranulat (EPS) wobei die treibmittelhaltige Schmelze mittels statischer Mischelemente in einer Dispergier-, Halte- und Abkühlstufe hergestellt und anschließend granuliert wird. Aufgrund der Abkühlung der Schmelze auf wenige Grad über der Erstarrungstemperatur ist die Abführung hoher Wärmemengen notwendig.

Um das Aufschäumen nach der Extrusion weitgehend zu verhindern, wurden verschiedene Verfahren für die Granulierung, wie Unterwassergranulierung (EP-A 305 862), Sprühnebel (WO 03/053651) oder Zerstäubung (US 6,093,750) vorgeschlagen.

Die WO 98/51735 beschreibt Graphitpartikel enthaltende expandierbare Styrolpolymere mit verringerter Wärmeleitfähigkeit, die durch Suspensionspolymerisation oder durch Extrusion in einem Zweischneckentextruder erhältlich sind. Aufgrund der hohen Scherkräfte in einem Zweischneckentextruder beobachtet man in der Regel einen signifikanten Molekulargewichtsabbau des eingesetzten Polymeren und/oder teilweise Zersetzung von zugegebenen Additiven, wie Flammschutzmittel.

Zur Erzielung optimaler Dämmeigenschaften und guter Oberflächen der Schaumstoffkörper ist die Zellzahl und Schaumstruktur, die sich beim Verschäumen der expandierbaren Styrolpolymeren (EPS) einstellt, von entscheidender Bedeutung. Die durch Extrusion hergestellten EPS-Granulaten lassen sich häufig nicht zu Schaumstoffen mit optimaler Schaumstruktur verschäumen.

Aufgabe der vorliegenden Erfindung war es, expandierbare Styrolpolymergranulate mit verbessertem Expansionsvermögen bereitzustellen. Die daraus durch Vorschäumen erhältlichen Schaumstoffpartikel sollten zudem eine verbesserte Verschweisbarkeit aufweisen und zu Partikelschaumformkörpern mit einer zwickelfreien Schaumstoffoberfläche führen.

Demgemäß wurden expandierbare Styrolpolymergranulate mit mindestens bi- oder multi-modaler Molekulargewichtsverteilung gemäß Anspruch 1 gefunden.

Die bi- oder multimodale Molekulargewichstverteilung kann beispielsweise gezielt durch Mischen und Aufschmelzen von Styrolpolymeren unterschiedlicher mittlerer Molekulargewichte eingestellt werden. Dabei werden Mischungen aus einem niedermolekularen Styrolpolymeren mit einem gewichtsmittleren Molekuargewicht M_{w} im Bereich von 1.000 bis 20.000 g/mol, insbesondere im Bereich von 2.000 bis 10.000 g/mol und einem hochmolekularen Styrolpolymeren mit einem gewichtsmittleren Molekulargewicht M_{w} im Bereich von 160.000 bis 400.000 g/mol, bevorzugt im Bereich von 220.000 bis 300.000 g/mol eingesetzt.

Das niedermolekulare Styrolpolymer wird in Mengen im Bereich von 0,1 bis 30 Gew.-%, bevorzugt im Bereich von 1 bis 10 Gew.-%, bezogen auf die Styrolpolymermischung, eingesetzt. Bis zu einem Anteil von 2 Gew.-% des niedermolekularen Styrolpolymeren, bezogen auf die Styrolpolymermischung, beobachtet man keine nennenswerte Absenkung der Glasübergangstemperatur des expandierbaren Styrolpolymergranulates und damit der Wärmeformbeständigkeit des daraus hergestellten Schaumstoffformteiles.

Eine deutlich verbesserte Expandierbarkeit erreicht man bei Anteilen des niedermolekularen Styrolpolymeren im Bereich von 3 bis 8 Gew.-%.

Erfindungsgemäß werden Mischungen aus
i) 0,1 bis 30 Gew.-% eines Styrolcopolymeren, z. B. ein Copolymer aus Styrol, Acrylsäure und/oder α-Methylstyrol, mit einem gewichtsmittleren Molekuargewicht M_{w} im Bereich von 1.000 bis 20.000 g/mol, insbesondere im Bereich von 2.000 bis 10.000 g/mol, und
ii) 99,9 bis 70 Gew.-% Standardpolystyrol (GPPS) mit einem gewichtsmittleren Molekulargewicht M_{w} im Bereich von 160.000 bis 400.000 g/mol bevorzugt im Bereich von 220.000 bis 300.000 g/mol eingesetzt.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylentherephtalat (PET) oder Polybutylenterephtalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Desweiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymerer (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatirx eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze Additive, Keimbildner, Füllstoffe, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phtalate, die in Mengen von 0,05 bis 10 Gew.-%, bezogen auf das Styrolpolymerisat, eingesetzt werden können.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis UD von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis UD im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren mit bimodaler Molekulargewichtsverteilung, umfasst die Schritte
a) Polymerisation von Styrolmonomer zu Standardpolystyrol (GPPS) mit einem mittleren Molekulargewicht im Bereich von 160.000 bis 400.000 g/mol,
b) Entgasungung der erhaltenen Styrolpolymerschmelze,
c) Einmischen eines niedermolekularen Styrolcopolymeren mit einem mittleren Molekulargewicht M_{w} im Bereich von 1000 bis 20.000 g/mol,
d) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
e) Kühlen der treibmittelhaltigen Styrolpolymerschmeize auf eine Temperatur, die mindestens 120°C, bevorzugt 150 - 200°C beträgt,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimpägnierung in Stufe d) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmomomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen d) bis f) eingehalten. Besonders bevorzugt werden ausschließlich statische Mischer und statische Kühler im gesamten Verfahren eingesetzt. Die Polymerschmelze kann durch Druckpumpen, z. B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

Die erfindungsgemäßen expandierbaren Styropolymergranulate weisen eine geringere Verklebung gegenüber Granulaten, die niedermolekulare Weichmacher enthalten, auf und zeichnen sich durch einen geringen Pentanverlust während der Lagerung auf.
Die erfindungsgemäßen expandierdierbaren Styrolpolymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden.

### Beispiele:

### Einsatzstoffe:

Polystyrol PS 158 K der BASF Aktiengesellschaft mit einer Viskositätszahl VZ von 98 ml/g (M_{w} = 280.000 g/mol, Uneinheitlichkeit Mw/Mn = 2,8),
Polystyrol PS 138 F der BASF Aktiengesellschaft mit einer Viskositätszahl VZ von 75 ml/g (M_{w}= 195 000, M_{w}/Mₙ = 2,7)
Styrolcopolymer (SC) aus Styrol, Acrylsäure und α-Methylstyrol mit einem gewichtsmittleren Molekulargweicht M_{w} = 3.000 g/mol, Glasübergangstemperatur Tg von 56°C (Joncryl^{®} ADF 1300 der Fa. Johnson Polymers)

### Beispiele 1 - 4:

Für die Beispiele wurde eine Polystyrolschmelze aus Polystyrol PS 158 K und SC mit den Gewichtsanteilen gemäß Tabelle 1 hergestellt und zusätzlich 6 Gew.-% n-Pentan, bezogen auf die Polymerschmelze eingemischt. Die treibmittelhaltige Schmelzemischung wurde von ursprünglich 260 auf 190 °C abgekühlt und bei einem Durchsatz von 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt. Die im gemessenen Pentangehalte im Granulat nach der Granulierung und nach 14 Tagen Lagerung sind in Tabelle 1 zusammengestellt.

Diese Granulate wurden in strömendem Wasserdampf zu Schaumstoffperlen (30 g/l) vorgeschäumt, 12 Stunden zwischengelagert und anschließend in gasdichten Formen mit Wasserdampf zu Schaumstoffkörpern verschweißt.

Zur Beurteilung der Verschweißung der Schaumpartikel wurde ein 4 cm dicker Schaumstoff-Probekörper zerbrochen und der der Anteil von zerstörten Schaumperlen und nichtzerstörten Perlen an der Bruchoberfläche ermittelt. Die Bruchverschweißung charakterisiert den Zusammenhalt der Perlen und ist damit ein Maß für die mechanischen Eigenschaften , wie Biegeverhalten. Die Oberflächengüte wurden wie in Tabelle 1 zusammengestellt beurteilt.

Tabelle 2 zeigt die Expandierbarkeit der Granulate. Bei höherem Gehalt an SC wir die minimale Schüttdichte deutlich verringert und in kürzerer Zeit erreicht.

**Tabelle 1: Charakterisierung und Eigenschaften der Beispiele 1 bis 4:**

| Beispiel | PS 158/SC | Pentangehalt [Gew.-%] | Pentangehalt 14d [Gew.-%] | Verschweißung [%] | Oberflächengüte |
|---|---|---|---|---|---|
| 1 | 100/0 | 5,3 | 5,1 | 80 | zufriedenstellend |
| 2 | 98/2 | 5,4 | 4,9 | 90 | gut |
| 3 | 94/6 | 5,3 | 4,8 | 95 | Sehr gut |
| 4 | 90/10 | 5,1 | 4,7 | 95 | Sehr gut |

**Tabelle 2: Expandierbarkeit der Granulate aus den Beispielen 1 bis 4 (Schüttdiche [g/l]**

| Schäumzeit [sec] | Beispiel 1 | Beispiel 2 | Beispiel 3 | Beispiel 4 |
|---|---|---|---|---|
| 2 | 23,7 | 25 | 20,8 | 19,2 |
| 3 | 21,7 | 20,8 | 16,7 | 15,2 |
| 4 | 20,0 | 18,5 | 14,7 | 16,1 |
| 5 | 19,2 | 16,7 | 14,7 | 17,9 |
| 6 | 18,5 | 16,1 | 16,1 | 19,2 |
| 8 | 16,7 | 16,7 | 20,0 | |
| 10 | 15,6 | 17,2 | 21,7 | |

### Beispiele 5 - 7:

Die treibmittelhaltigen Polystyolschmelze (6 Gew.-% n-Pentan) wurde mit 100 kg/h Durchsatz durch eine Düsenplatte mit 300 Bohrungen (Durchmesser am Düsenaustritt (D) 0,4 mm) extrudiert. Die Schmelzetemperatur betrug 160°C. Die erhaltenen expandierbaren Polystyrolgranulate besaßen einen einheitlichen Granulatdurchmesser von 1,0 mm. Die erhaltenen Granulate wurden anschließend mit strömendem Wasserdampf expandiert und das Expansionsvermögen bestimmt.

| Beispiel | Polymermischung | M_{w}/Mₙ | Expansionsvermögen |
|---|---|---|---|
| 5 | PS 158K | 2,8 | 28 |
| 6 | PS 138 F | 2,7 | 29 |
| 7 | PS 158 K/ PS 138 F = 50/50 | 3,4 | 47 |

## Patentansprüche

1. Expandierbare Styrolpolymergranulate mit einer bi- oder multi-modalen Molekulargewichtsverteilung, **dadurch gekennzeichnet, dass** sie, jeweils bezogen auf den gesamten Styrolpolymeranteil
i) 0,1 bis 30 Gew.% eines Styrolcopolymeren mit einem gewichtsmittleren Molekuargewicht M_{w} im Bereich von 1.000 bis 20.000 g/mol, und
ii) 99,9 bis 70 Gew.-% Standardpolystyrol (GPPS) mit einem gewichtsmittleren Molekulargewicht M_{w} im Bereich von 160.000 bis 400.000 g/mol
enthalten.

2. Expandierbare Styrolpolymerisate nach Anspruch 1, **dadurch gekennzeichnet, dass** als Styrolcopolymer ein Copolymer aus Styrol, Acrylsäure und/oder α-Methylstyrol eingesetzt wird.

3. Expandierbare, Styrolpolymergranulate nach Anspruch 1 oder 2, **dadurch gekennzeichnet, dass** sie 3 bis 7 Gew.% eines organischen Treibmittels enthalten.

4. Verfahren zur Herstellung von expandierbaren Styrolpolymergranulaten nach Anspruch 1, umfassend die Schritte
a) Herstellen einer Mischung von Styrolpolymeren, welche, jeweils bezogen auf den gesamten Styrolpolymeranteil,
i) 0,1 bis 30 Gew.-% eines Styrolcopolymeren mit einem gewichtsmittleren Molekuargewicht M_{w} im Bereich von 1.000 bis 20.000 g/mol, und
ii) 99,9 bis 70 Gew.-% Standardpolystyrol (GPPS) mit einem gewichtsmittleren Molekulargewicht M_{w} im Bereich von 160.000 bis 400.000 g/mol
enthalten.
b) Einmischen eines organischen Treibmittels in die Polymerschmelze mittels statischen oder dynamischen Mischer bei einer Temperatur von mindestens 150°C,
c) Kühlen der treibmittelhaltigen Polymerschmelze auf eine Temperatur von mindestens 120°C
d) Austrag durch eine Düsenplatte mit Bohrungen, deren Durchmesser am Düsenaustritt höchstens 1,5 mm beträgt und
e) Granulieren der treibmittelhaltigen Schmelze direkt hinter der Düsenplatte unter Wasser bei einem Druck im Bereich von 1 bis 25 bar.

5. Verfahren zur Herstellung von Partikelschaumformteilen, **dadurch gekennzeichnet, dass** man expandierdierbare Styrolpolymergranulate gemäß Anspruch 1 in einem ersten Schritt mittels Heißluft oder Wasserdampf zu Schaumpartikeln mit einer Dichte im Bereich von 8 bis 100 g/l vorschäumt und in einem 2. Schritt in einer geschlossenen Form verschweißt.

## Claims

1. An expandable pelletized styrene polymer material having a bi- or multimodal molecular weight distribution, which, based in each case on the entire styrene polymer content, comprises
i) from 0.1 to 30% by weight of a styrene copolymer with a weight-average molar mass M_{w} in the range from 1000 to 20 000 g/mol, and
ii) from 99.9 to 70% by weight of standard polystyrene (GPPS) with a weight-average molar mass M_{w} in the range from 160 000 to 400 000 g/mol.

2. The expandable styrene polymer according to claim 1 wherein the styrene copolymer used comprises a copolymer composed of styrene, acrylic acid and/or α-methylstyrene.

3. The expandable pelletized styrene polymer material according to claim 1 or 2 which comprises from 3 to 7% by weight of an organic blowing agent.

4. A process for preparing expandable pelletized styrene polymer materials according to claim 1, comprising the steps of
a) preparing a mixture of styrene polymers which, based in each case on the entire styrene polymer contents, comprise
i) from 0.1 to 30% by weight of a styrene copolymer with a weight-average molar mass M_{w} in the range from 1000 to 20 000 g/mol, and
ii) from 99.9 to 70% by weight of standard polystyrene (GPPS) with a weight-average molar mass M_{w} in the range from 160 000 to 400 000 g/mol,
b) mixing to incorporate an organic blowing agent into the polymer melt by means of a static or dynamic mixer at a temperature of at least 150°C,
c) cooling the polymer melt comprising blowing agent to a temperature of at least 120°C,
d) discharge via a die plate with holes whose diameter at the discharge from the die is at most 1.5 mm, and
e) pelletizing the melt comprising blowing agent directly downstream of the die plate under water at a pressure in the range from 1 to 25 bar.

5. A process for producing moldable-foam holdings, which comprises, in a first step, using hot air or steam to prefoam expandable pelletized styrene polymer materials according to claim 1 to give foam beads whose density is in the range from 8 to 100 g/l, and, in a 2nd step, fusing these materials in a closed mold.

## Revendications

1. Granulés de polymère de styrène expansibles ayant une distribution multimodale de masse moléculaire, **caractérisés en ce qu'**ils contiennent, chaque fois par rapport à la quantité totale de polymères de styrène
i) 0,1 à 30 % en poids d'un copolymère de styrène ayant une masse moléculaire moyenne en poids M_{w}, dans la plage de 1 000 à 20 000 g/mole, et
ii) 99,9 à 70 % en poids de polystyrène standard (GPPS) ayant une masse moléculaire moyenne en poids M_{w} dans la plage de 160 000 à 400 000 g/mole.

2. Polymères de styrène expansibles selon la revendication 1, **caractérisés en ce qu'**on utilise comme copolymère de styrène un copolymère de styrène, acide acrylique et/ou α-méthylstyrène.

3. Granulés de polymère de styrène expansibles selon la revendication 1 ou 2, **caractérisés en ce qu'**ils contiennent de 3 à 7 % en poids d'un agent d'expansion organique.

4. Procédé pour la préparation de granulés de polymère de styrène expansibles selon la revendication 1, comprenant les étapes
a) préparation d'un mésange de polymères de styrène qui contiennent, chaque fois par rapport à la quantité totale de polymère de styrène
i) 0,1 à 30 % en poids d'un copolymère de styrène ayant une masse moléculaire moyenne en ponds M_{w} dans la plage de 1 000 à 20 000 g/mole, et
ii) 99,9 à 70 % en poids de polystyrène standard (GPPS) ayant une masse moléculaire moyenne en poids M_{w} dans la plage de 160 000 à 400 000 g/mole,
b) incorporation d'un agent d'expansion organique dans la masse fondue de polymères, au moyen de mélangeurs statiques ou dynamiques, à une température d'au moins 150°C,
c) refroidissement de la masse fondue de polymères contenant un agent d'expansion, jusqu'à une température d'au moins 120°C,
d) décharge à travers un plaque de filière comportant des orifices sont le diamètre à la sortie de à filière est au maximum de 1,5 mm et
e) granulation de la masse fondue contenant un agent d'expansion, directement après la plaque de filière, sous l'eau, sous une pression dans la plage de 1 à 25 bars.

5. Procédé pour la production de pièces moulées en mousse articulaire, **caractérisés en ce qu'**on soumet à un pré-moussage dans une première étape, des granulés de polymères de styrène expansibles selon la revendication 1, au moyen d'air chaud ou de vapeur d'eau, pour obtenir des particules de mousse ayant une densité dans la plage de 8 à 100 g/l et, dans une deuxième étape on les soude dans un moule fermé.
